Europäisches Patentamt

European Patent Office

Office européen des brevets

(19)

(11) Veröffentlichungsnummer : **0 207 111**
B1

(12) EUROPÄISCHE PATENTSCHRIFT

(45) Veröffentlichungstag der Patentschrift :
07.03.90

(51) Int. Cl.⁵ : **G 11 B 33/04**

(21) Anmeldenummer : 86900128.9

(22) Anmeldetag : 14.12.85

(86) Internationale Anmeldenummer :
PCT/EP 85/00706

(87) Internationale Veröffentlichungsnummer :
WO/8603878 (03.07.86 Gazette 86/14)

(54) BEHÄLTER FÜR EINE SCHALL- ODER BILDPLATTE.

(30) Priorität : 18.12.84 DE 8436935 U

(43) Veröffentlichungstag der Anmeldung :
07.01.87 Patentblatt 87/02

(45) Bekanntmachung des Hinweises auf die Patenterteilung : 07.03.90 Patentblatt 90/10

(84) Benannte Vertragsstaaten :
DE FR GB IT

(56) Entgegenhaltungen :
EP-A- 0 112 436
EP-A- 0 139 161
DE-A- 3 216 888
DE-B- 2 248 408

(73) Patentinhaber : **idn inventions and development of**
**novelties ag**
**Hartbertstrasse 9**
**CH-7002 Chur (CH)**

(72) Erfinder : **ACKERET, Peter**
**Allmendstrasse 18**
**CH-8700 Küsnacht (CH)**

(74) Vertreter : **Sparing Röhl Henseler Patentanwälte Euro-**
**pean Patent Attorneys**
**Rethelstrasse 123**
**D-4000 Düsseldorf 1 (DE)**

## Beschreibung

Die Erfindung betriff einen Behälter für eine Schall- oder Bildplatte, insbesondere für eine sogenannte Compac-Disc.

Aus der deutschen Patentschrift 2 248 408 ist ein Behälter für Standard-Magnetbandkassetten (Kompaktkassetten) bekannt, der ein Gehäuse aufweist, in dem ein Halter für eine Magnetbandkassette gleitbeweglich zwischen einer inneren Aufbewahrungsposition und einer äußeren Entnahmeposiiton geführt ist, in die der Halter durch eine Federanordnung vorgespannt ist. Ferner ist eine Verriegelungsansordnung vorgesehen, die den Halter in seiner Aufbewahrungsposition im Gehäuse gegen die Federvorspannung hält und manuell auslösbar ist. Der Halter besitzt eine Frontwand, die die Gehäuseöffnung in der Aufbewahrungsposition abdeckt. Hierbei ist der Halter seitlich ausgeschnitten, so daß die Magnetbandkassette quer an ihren Kanten erfaßbar ist und über die Frontwang des Halters hinweg herausgehoben werden kann.

Für Compact-Discs oder andere plattenförmige Aufzeichnungsträger, wie Schall- oder Bildplatten, ist diese Bauweise weniger geeignet. Die Abspielgeräte für solche Platten sind nämlich so konzipiert, daß sie einen Einführungsschlitz für die platte aufweisen, die der Benutzer dabei mit zwei Fingern zangenartig auf ihren Hauptflächen im Klemmgriff hält. Es ist daher wünschenswert, den Behälter für solche Platten derart zu gestalten, daß Entnahme und Einlegen der Platte in analoger Weise erfolgen können, damit eine zusätzliche Manipulierung der Platte entfallen kann.

Ferner ist aus der DE-A-3 216 888 ein Behälter für Magnetbandkassetten und auch andere plattenförmige Aufzeichnungsträger bekannt, bei dem die Frontwand in der Entnahmeposition soweit quer zur Fluchtebene der Platte verschwenkt ist, daß die Platte in Fluchtlinie aus dem Halter bewegbar ist. Die Schwenkachse der Frontwand ist dabei gegenüber der Ebene der Frontwand in Einschubrichtung des Halters versetzt, daß die Kassette oder Platte frontseitig freiliegt. Dafür ist entsprechend viel Platz erforderlich, der bei beengten Raumverhältnissen, etwa beim Einbau in ein Kraftfahrzeug, nicht zur Verfügung steht.

EP-A-112 346 offenbart eine Kassetten- und Plattenbehälterbauart, bei der ein das Aufbewahrungsgut tragender Halter schwenkbeweglich mit einem Schieber verbunden ist, der eine mehreren Haltern gemeinsam zugeordnete Frontwand aufweist. Die Entnahme ist dabei zwar bequem, doch ist der Platzbedarf noch höher als bei der zuvor erörterten bekannten Konstruktion.

Aufgabe der Erfindung ist es, einen Behälter mit den im Oberbegriff des Patentanspruchs 1 genanten Merkmalen zu schaffen, der besonders für den Einsatz unter beengten Platzverhältnissen, insbesondere in Kraftfahrzeugen, geeignet ist.

Es versteht sich dabei, daß die Bedienung des Behälters nur ein Minimum an Aufmerksamkeit und Handfertigkeit seitens des Fahrers erfordern soll, um von vornherein Unfallgefahr auszuschließen.

Dies wird erfindungsgemäß dadurch gelöst, daß ein auf die Platte in der Entnahmeposition des Halters wirkender Ausschubmechanismus vorgesehen ist, der die Platte in Fluchtrichtung der Platte über die Frontwand hinaus in eine Position weiterfördert, in der sie vor der Frontwand auf ihren Hauptflächen zangenartig erfaßbar und entnehmbar ist.

Da der Behälter zudem nur die unbedingt nötigen Abmessungen aufweisen soll, ist diese Bauweise besonders geeignet, um eine Vielzahl von Haltern in einem gemeinsamen Gehäuse unterzubringen, wo die Platten mit ihren Haltern dann dicht an dicht gestapelt liegen, gleichwohl aber bequem einzeln entnehmbar und wieder einlegbar sind.

Weitere Ausgestaltungen der Erfindung sind der nachfolgenden Beschreibung und den Ansprüchen zu entnehmen.

Die Erfindung wird nachstehend anhand der in den beigefügten Abbildungen dargestellten Ausführungsbeispiele näher erläutert.

Fig. 1 zeigt im Schnitt einen Behälter für Platten in Aufbewahrungsposition.

Fig. 2 zeigt einen Schnitt längs der Linie II-II von Fig. 1.

Fig. 3 zeigt einen Schnitt längs der Linie III-III von Fig. 1.

Fig. 4 zeigt einen Schnitt längs der Linie IV-IV von Fig. 1.

Fig. 5 zeigt im Schnitt den Behälter von Fig. 1 in Entnahmeposition für eine Platte.

Fig. 6 zeigt perspektivisch das frontseitige Ende eines Behälters einer weiteren Ausführungsform.

Fig. 7 zeigt, weitgehend schematisiert, teilweise weggebrochen Details des Behälters von Fig. 6.

Fig. 8 zeigt im Schnitt Details des Behälters von Fig. 6.

Fig. 9 zeigt perspektivisch und ausschnittweise eine weitere Ausführungsform eines Disc-Halters für einen Behälter.

Fig. 10a, b und c zeigen eine Ausführungsform eines Ausschubmechanismus für eine Platte.

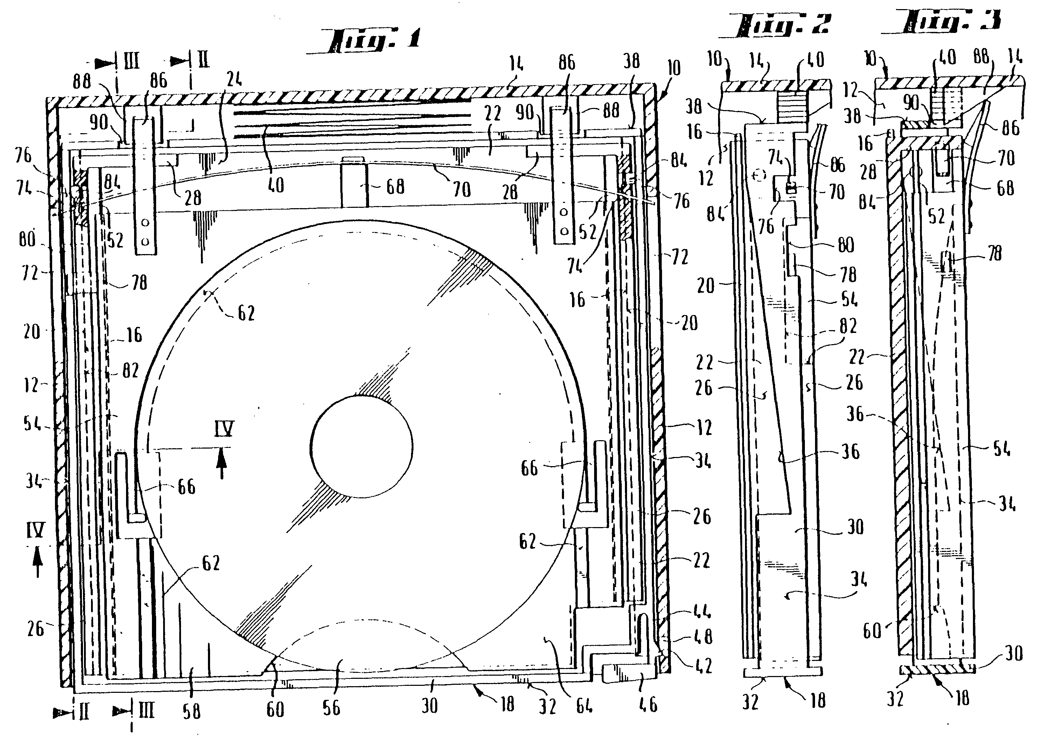

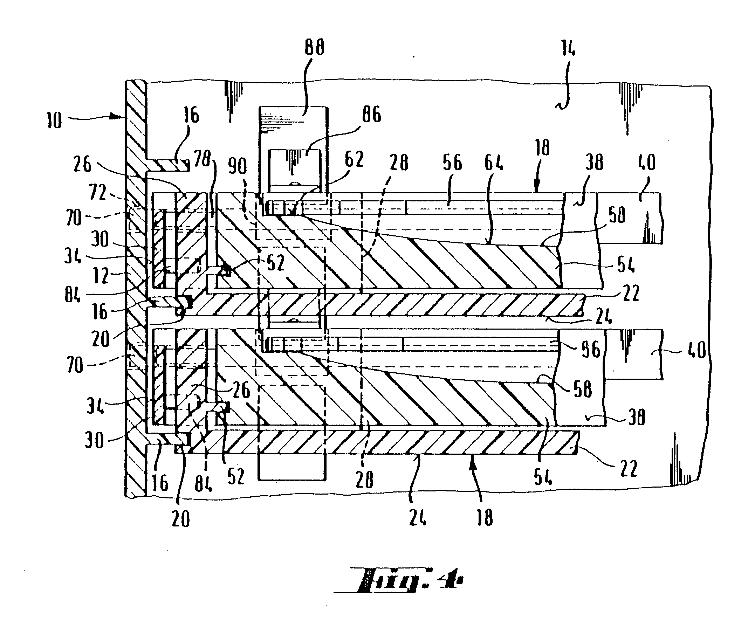

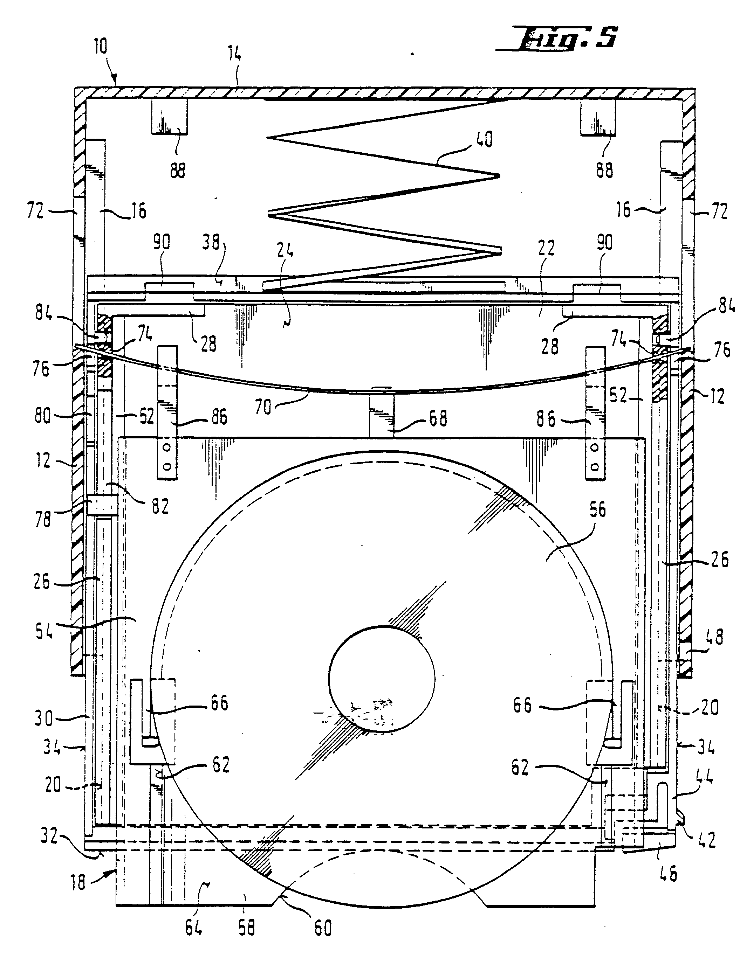

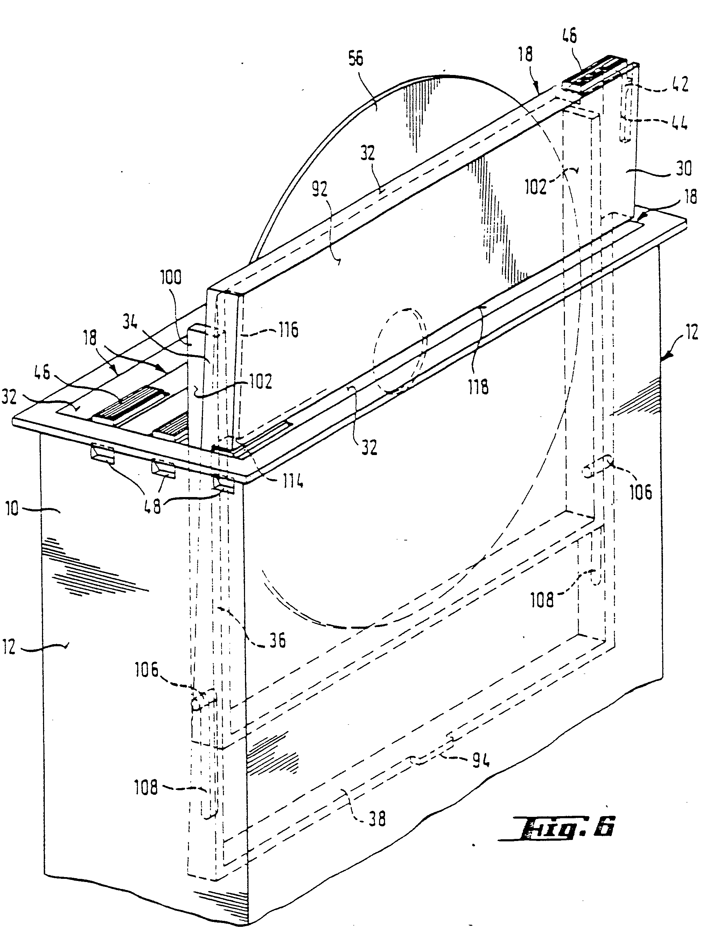

Der in den Fig. 1 bis 5 dargestellte Behälter ist quaderförmig und umfaßt ein Gehäuse 10 bestehend aus einem Boden, einer Deckwand, zwei Seitenwänden 12 und einer Rückwand 14, d. h. das Gehäuse 10 ist stirnseitig offen. Die Seitenwände 12 besitzen eine Reihe von einwärts gerichteten Führungsrippen 16, von denen jeweils zwei einander gegenüberliegende zur Führung jeweils eines Disc-Halters 18 dienen, der zu diesem Zweck entsprechende Führungsnuten 20 aufweisen kann. Das Gehäuse 10 nimmt mehrere, beispielsweise sechs Disc-Halter 18 dicht übereinander gestapelt angeordnet auf.

Jeder Disc-Halter 18 umfaßt einen Schieber 22 bestehend aus einer Bodenplatte 24, Seitenwänden 26 und an deren gehäuseinneren Enden angrenzenden Rückwandabschnitten 28. Jeder Schieber 22 besitzt ferner einen ihn umgebenden Rahmen 30, der aus einer Frontwand 32, zwei seitlichen Wangen 34 mit etwa dreieckigen Ausschnitten 36 und einer zwischen der Rückwand 14 des Gehäuses 10 und der Rückwand 28 des Schiebers 22 befindlichen Rückwand 38 besteht. Zwischen den benachbarten Wänden des Schiebers 22 und des Rahmens 30 befindet sich jeweils ein Zwischenraum. Die seitlichen Wangen 34 des Rahmens 30 sind mit ihrer Unterkante derart angeordnet, daß die Führungsnuten 20 des Schiebers für den Eingriff mit den Führungsrippen 16 freibleiben.

Auf die Rückwand 38 des Rahmens 30 wirkt eine Auswerffeder 40, die sich an der Innenseite der Rückwand 14 des Gehäuses 10 abstützt. Die Auswerffeder 40 kann, wie dargestellt, eine Zickzackfeder oder eine Schrauben- oder Blattfeder o. dgl. sein, wobei bei Verwendung von Blattfedern diese auch kammartig zu Gruppen zusammengefaßt sein können, wobei jeweils eine Zunge an einer Rückwand 38 eines Rahmens 30 angreift.

Der Rahmen 30 ist im Frontwandbereich mit einem Verriegelungsmechanismus versehen, der bei dem dargestellten Ausführungsbeispiel aus einem hakenförmigen Riegel 42 besteht, der an einer federnden Zunge 44, die einerseits eine Auslösetaste 46 trägt und andererseits einstückig mit dem Rahmen 30 verbunden ist, angeformt ist. Der Riegel 42 steht im eingeschobenen Zustand des Disc-Halters 18 (Fig. 1) mit einer Falle 48 in der Seitenwand 12 des Gehäuses 10 in Eingriff. Zum Auslösen ist die Auslösetaste 46 manuell parallel zur Hauptebene des Disc-Halters 18 und damit der Bodenplatte 24 beweglich, wodurch der Riegel 42 aus der Falle 48 gelöst und der Disc-Halter 18 aufgrund der Auswerffeder 40 in Ausschubrichtung bewegt wird.

Die Seitenwände 26 des Schiebers 22 besitzen nach innen gerichtete Führungsrippen 52, die mit entsprechenden seitlichen Führungsnuten in einer Aufnahmeplatte 54 für eine Compact-Disc 56 zusammen wirken, die hierdurch in Ausschubrichtung des Disc-Halters 18 aus dem Gehäuse 10 in Bezug auf den Schieber 22 verschiebbar geführt ist.

Die Aufnahmeplatte 54 besitzt eine Vertiefung 58, die gehäuseinnenseitig kreisförmig entsprechend dem Durchmesser der Compact-Disc 56 ist, während sie im Anschluß daran ab Erreichen ihres vollen Durchmessers quer zur Ausschubrichtung diese Breite bis zur Frontseite des Gehäuses 10 beibehält. Die Vertiefung 58 ist etwa tiefer als die Stärke einer Compact-Disc 56, so daß diese bequem von der Vertiefung 58 aufgenommen werden kann. Frontseitig besitzt die Aufnahmeplatte 54 einen Ausschnitt 60, der das Ergreifen der Compact-Disc 56 bei ausgeschobenem Disc-Halter 18 ermöglicht, ohne mit der Aufnahmeplatte 54 zu kollidieren. Die Vertiefung 58 bildet randseitige Auflageflächen 62 für die Compact-Disc 56, während sich im daran anschließenden mittleren Bereich eine zusätzliche wannenförmige Eintiefung 64 befinden kann, die zum Schützen der Compact-Disc 56 gegenüber Verkratzen dient. Ferner sind zwei in der Halterebene federnd auslenkbare zungenartige Einzugsarme 66 benachbart zum Bereich der Vertiefung 58 mit gleichbleibender Breite vorgesehen, deren freie Enden nach innen abgewinkelt sind. Die Einzugsarme 66 legen sich mit dem abgewinkelten Abschnitt seitlich an die Disc 56 an, wenn diese in die Vertiefung 58 eingeschoben wird bzw. ist. Dadurch wird erreicht, daß beim Ausschub des Disc-Halters 18 aus dem Gehäuse 10 unter der Wirkung der Auswerffeder 40 die Disc 56 gebremst wird, so daß sie nicht herauskatapultiert wird, und bei Verwendung des Behälters in einem Kraftfahrzeug Vibrationen der Disc 56 in ihrem Disc-Halter 18 gedämpft werden. Beim Einschieben einer Disc 56 sorgen die Einzugsarme 66 ferner dafür, daß die Disc 56 zuverlässig bis in ihre Endlage gelangt. Der Benutzer spürt die Überwindung der Bremskraft der Einzugsarme 66 deutlich, so daß er gewiß sein kann, daß die Disc 56 sicher verstaut ist. Die freien Enden der Einzugsarme 66 können ferner abgeköpft sein, um die Disc 56 übergreifen zu können, damit die Einzugsarme 66 nicht unter die Disc 56 gelangen können. Ferner können gegebenenfalls im rückwärtigen Bereich der Aufnahmeplatte 54 die Disc 56 übergreifende Niederhalter (nicht dargestellt) vorgesehen sein.

Die Aufnahmeplatte 54 besitzt an ihrem gehäuseinneren Ende einen Fortsatz 68, an dessen freiem Ende eine Froschfeder 70 angreift. Die Froschfeder 70 erstreckt sich bis in einander gegenüberliegende Schlitze 72 der Seitenwände 12 des Gehäuses 10 und jeweils durch eine Öffnung 74 mit dortiger Spitzenlagerung in den Seitenwänden 26 und durch zu diesen benachbarte Ausschnitte 76 in den Wangen 34. Die Froschfeder 70 ist beispielsweise eine schmale Blattfeder.

Die Aufnahmeplatte 54 besitzt im hinteren Bereich einen seitlichen Arm 78, der sich bis in eine Ausnehmung 80 frontseitig von dem Ausschnitt 76 der an dieser Seite befindlichen Wange 34 erstreckt. Zu diesem Zweck ist in der benachbarten Seitenwand 26 eine Ausnehmung 82 vorgesehen. In der eingeschobenen Stellung des Disc-Halters 18 liegt der Arm 78 an der frontseitigen Kante der Ausnehmung 80 an, die breiter als der Arm 78 ist. Die Ausnehmung 82 erstreckt sich weiter nach vorne zur Frontseite des Gehäuses 10 als die Ausnehmung 80.

Der Rahmen 30 ist mittels Zapfen 84 an den hinteren Enden der Seitenwände 26 des Schiebers 22 gelagert, so daß er gegenüber dem Schieber 22 und der Aufnahmeplatte 54 verschwenkbar ist.

Wie bereits ausgeführt, ist die Aufnahmeplatte 54 mit ihrem Arm 78 mit dem Rahmen 30 in der eingeschobenen Stellung des Disc-Halters 18 verklinkt. Die Froschfeder 70 ist in dieser Stellung in Richtung zur Rückwand 14 des Gehäuses 10 gebogen und befindet sich in ihrer hinteren stabilen Position. Durch Druck auf die Auslösetaste 46 wird der Riegel 42 entriegelt und damit der Schieber 22 mit dem Rahmen 30 und der Aufnahmeplatte 54 durch die Einwirkung der Auswerffeder 40 aus dem Gehäuse 10 soweit herausgeschoben, bis die Froschfeder 70 am frontseitigen Ende der seitlichen Schlitze 72 des Gehäuses 10 ansteht. Da der Rahmen 30 gegenüber dem Schieber 22 schwenkbar ist, kann dessen Frontwand 32 manuell infolge der Ausschnitte 36 nach unten weggeschwenkt werden, oder dies kann automatisch dadurch geschehen, daß die Auswerffeder 40 im oberen Bereich des Rahmens 30 und damit exzentrisch hierzu angreift, wie im Ausführungsbeispiel dargestellt ist. Die Ausschnitte 36 sind dabei derart gestaltet, daß diese sich bis auf die Führungsrippen 16 absenken und sich die Frontwand 32 des Rahmens 30 mit ihrer Oberkante unter die Unterkante der Aufnahmeplatte 54 bewegt. Hierdurch wird außerdem der Arm 78 freigegeben und daher die Aufnahmeplatte 54 vom Schieber 22 entkoppelt. Durch den Druck der Auswerffeder 40 springt die Froschfeder 70 in ihre vordere, zweite stabile, d. h. zur Frontseite hin gebogene Lage, wodurch die Aufnahmeplatte 54 gegenüber dem Schieber 22 vorgeschoben wird, so daß die Disc 56 ergriffen und entnommen werden kann.

Der Einschub erfolgt in der Weise, daß Druck auf die Aufnahmeplatte 54 ausgeübt wird, bis die Froschfeder 70 ihre hintere stabile Lage einnimmt. Hierbei ist es notwendig, daß die Aufnahmeplatte 54 an den Schieber 22 angekoppelt wird. Dies geschieht über zwei Klinken 86 am rückwärtigen Ende der Aufnahmeplatte 54, die sich von dort in Richtung zur Rückwand 14 erstrecken. Die Klinken 86 hängen sich an den Rückwandabschnitten 28 des Schiebers 22 ein. Nun kann der Rahmen 30, der bisher den Schieber 22 in der ausgefahrenen Position gehalten hat, hochgeklappt und zusammen mit dem Schieber 22 eingeschoben werden, bis der Riegel 42 in die Falle 48 einfällt. Kurz vor der Endstellung werden die beiden Klinken 86 durch Steuernocken 88 an der Rückwand 14 des Gehäuses 10 wieder entriegelt, da in dieser Position der Rahmen 30 mit der Aufnahmeplatte 54 wieder über den Arm 78 verriegelt ist. Damit die Klinken 86 entriegelt bleiben, verschiebt sich der Arm 78 in der Ausnehmung 80 nach vorne. Die Rückwand 38 ist mit Ausnehmungen 90 versehen, damit sie nicht mit den Steuernocken 88 kollidiert.

Die Frontwand 32 des Rahmens 30 erstreckt sich über die gesamte Höhe des Schiebers 22, so daß das Gehäuse 10 durch die übereinander angeordneten Frontwände 32 der Rahmen 30 geschlossen wird. Die Auslösetasten 46 sind zweckmäßigerweise abwechselnd auf der einen und auf der anderen Gehäuseseite angeordnet.

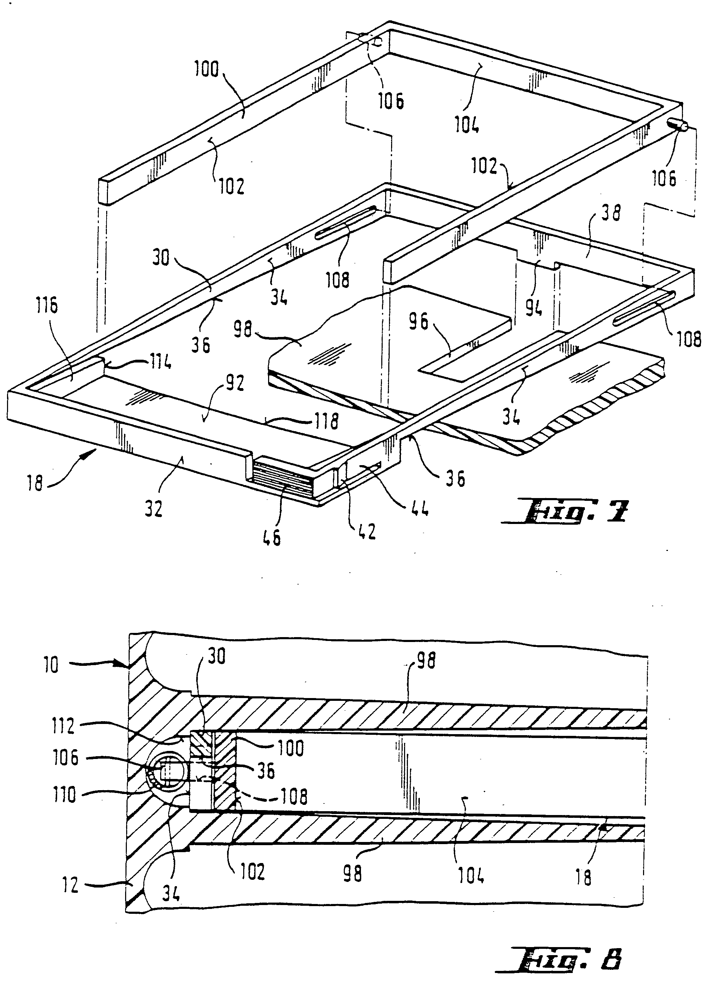

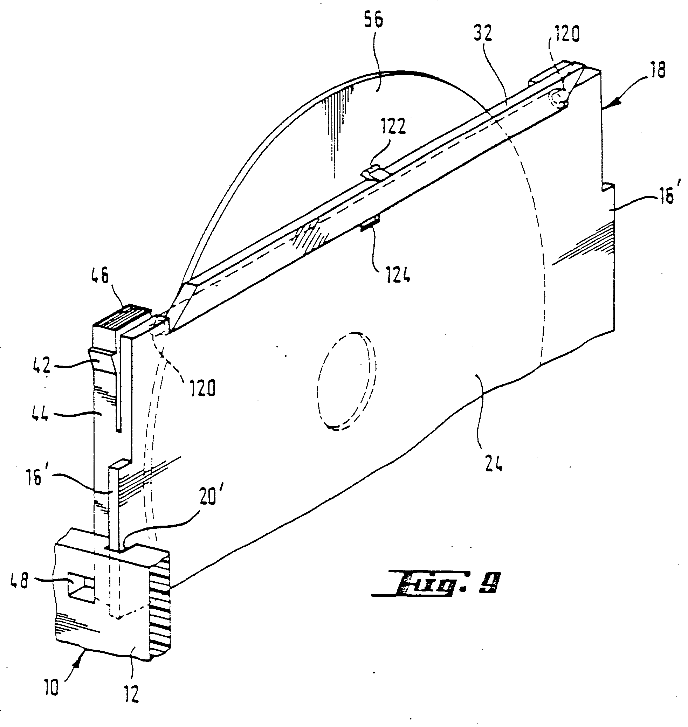

Bei der in den Fig. 6 bis 8 dargestellten Ausführungsform umfaßt der Disc-Halter 18 einen Rahmen 30 mit einer das frontseitige Ende verstärkenden Bodenplatte 92. Die Rückwand 38 des Rahmens 30 besitzt einen abwärts gerichteten Fortsatz 94, der in einer Nut 96 von einem im Gehäuse 10 vorgesehenen Zwischenboden 98 läuft. Die Zwischenböden 98 sind oben und unten wannenartig eingetieft, wie in Fig. 8 angedeutet ist, so daß eine Disc 56 beim Einlegen nur in ihrem Randbereich mit Behälterteilen in Kontakt kommt, so daß sie gegen Zerkratzen geschützt ist.

Ferner ist ein Innenrahmen 100 vorgesehen, der Seitenwände 102 und eine diese verbindende Rückwand 104 aufweist, wobei die Seitenwände 102 in ihrem hinteren Bereich jeweils einen nach außen gerichteten Zapfen 106 aufweisen, der sich in ein Langloch 108 der Wange 34 erstreckt. An dem über das Langloch 108 hinausragenden Ende jedes der beiden Zapfen 106 ist eine Zugfeder 110 eingehängt, deren anderes Ende nahe der frontseitigen Öffnung des Gehäuses 10 eingehängt ist und die in einem Kanal 112 der Seitenwand 12 verläuft (vgl. Fig. 8). Die Seitenwände 102 sind kürzer als die Wangen 34, so daß bei eingeschobenem Disc-Halter 18 ihre Enden sich an die ihnen zugekehrte Fläche 114 von Steuerteilen 116 legen, die in der Ecke zwischen den Wangen 34, der Frontwand 32 und der Bodenplatte 92 an den Rahmen 30 angeformt sind.

Nach manueller Entriegelung wirken die Zugfedern 110 auf den Innenrahmen 100, der die Kraft auf die Steuerteile 16 und damit auf den äußeren Rahmen 30 überträgt. Beiden Rahmen 30, 100 setzen sich somit nach außen in Bewegung, bis die gehäuseseitige Endkante 118 der Bodenplatte 92 vollständig vor dem Gehäuse 10 ist. Unmittelbar danach trifft der Fortsatz 94 an das Ende der Nut 96, wodurch der Rahmen 30 um eine Achse kippen kann, die in der Berührungslinie zwischen dem Fortsatz 94 und der Nut 96 liegt. Dieses Kippen wird dadurch begünstigt, daß die Zapfen 106 längs der Langlöcher 108 laufen, weil die Seitenwände 102 des Innenrahmens nicht mehr an den Steuerteilen 116 anstoßen, während das Langloch 108 in der gekippten Lage des Rahmens 30 parallel zur Führung des Innenrahmens 100 verläuft. Die Führung ist in Fig. 8 erkennbar. Die Disc 56 wird daher um den Restweg des Innenrahmens 100, begrenzt durch das Ende der Langlöcher 108, über die Frontwand 32 hinweggefördert, so daß die Disc 56 frei über diese hinaussteht.

Zum Einlegen der Disc 56 wird der Innenrahmen 100 zunächst mittels der Disc 56 zurückgedrückt, wonach der Rahmen 30 hochgeklappt und der gesamte Disc-Halter 18 eingeschoben wird.

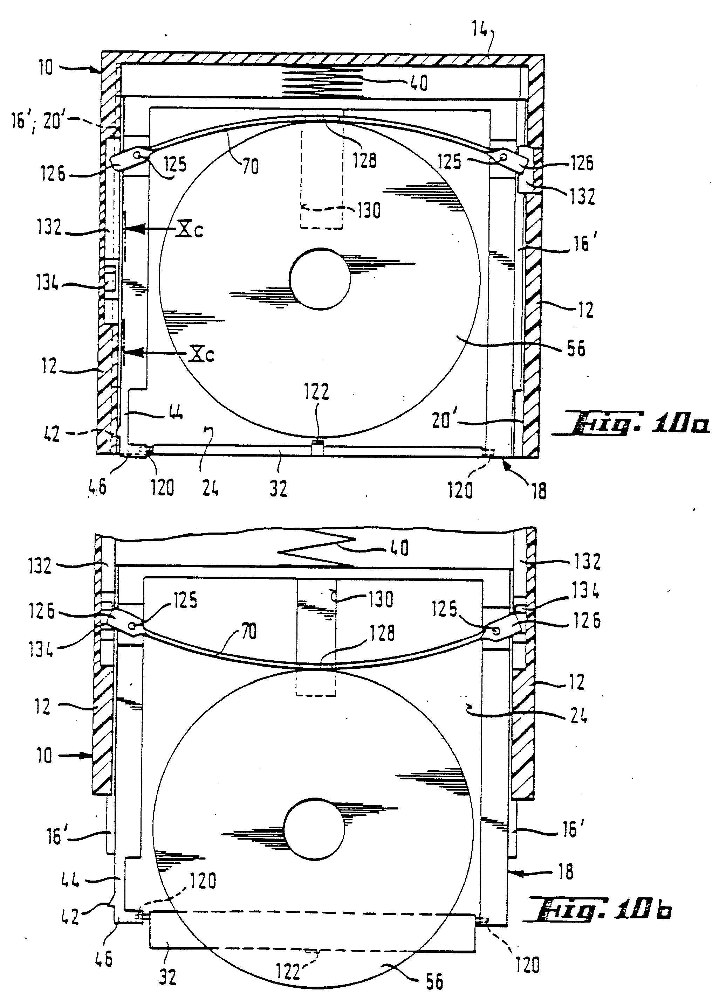

Bei der in Fig. 9 dargestellten Ausführungsform besitzt der Disc-Halter 18 eine Bodenplatte 24 mit seitlichen Führungsstegen 16′ zum Eingriff mit entsprechenden Führungsnuten 20′ in den Seitenwänden 12 des Gehäuses 10. Die Frontwand 32 ist mit der Bodenplatte 24 gelenkig verbunden, etwa wie dargestellt mittels Gelenkzapfen 120 oder vorzugsweise mittels eines angespritzten Filmgelenks. Die Frontwand 32 steht durch eine Feder in Aufklapprichtung unter Vorspannung und rastet bei eingeschobenem Disc-Halter 18 mit einem Nocken 122 reibschlüssig in eine entsprechende Ausnehmung 124 des nächstbenachbarten Disc-Halters 18 an dessen Unterseite ein. Als Federanordnung 40 zum Vorspannen dieses Disc-Halters 18 in die Entnahmeposition kann eine Blattfeder verwendet werden, die mit einem Ende an der Rückwand 14 des Gehäuses 10 festgelegt ist und mit ihrem freien, ausgestellten Ende auf die rückwärtige Kante des Disc-Halters 18 einwirkt. Die Bodenplatte 24 kann beidseits wannenartig eingetieft sein.

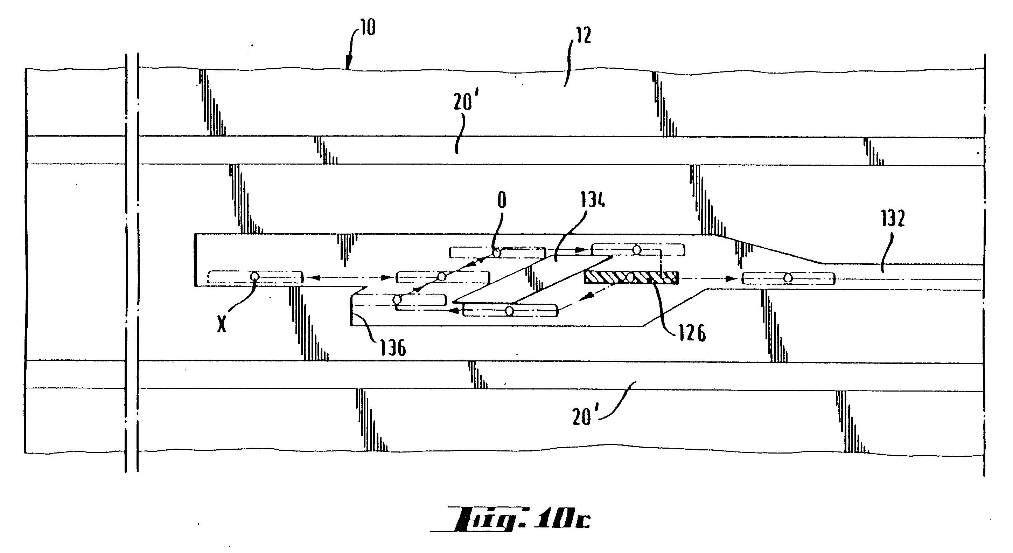

Bei dem in den Fig. 10a bis 10c dargestellten Ausschubmechanismus für eine Disc 56 sind auf dem Disc-Halter 18 nahe seinen beiden geführten Seitenkanten Lagerzapfen 125 vorgesehen, auf denen eine langgestreckte metallische Froschfeder 70 in Form einer Blattfeder aufgesteckt ist. Die Froschfeder 70 ist benachbart zu den Lagerzapfen 125 um 90° verdreht, so daß ihr mittlerer Teil in Ausschubrichtung weich federt, die Außenabschnitte 126 im Bereich der Lagerzapfen 125 in dieser Richtung steif, aber senkrecht dazu elastisch nachgiebig sind. Der Abstand der Lagerzapfen 125 ist kleiner als der lineare Abstand der Löcher der Froschfeder 70, so daß diese zwei stabile Positionen einnehmen kann. Sobald die Verriegelung des Disc-Halters 18 durch Betätigung der Auslösetaste 46 gelöst wird, fährt der Disc-Halter 18 aus dem Gehäuse 10 aus, wobei die Disc 56 sich mit ihrer gehäuseinneren Endkante an dem mittleren Bereich der Froschfeder 70 abstützt. Ein Abrutschen der Disc 56 wird durch Fortsätze 128 in der Mitte der Froschfeder 70, die sich nach oben und unten in komplementäre Nuten 130 des darunter und darüber befindlichen Disc-Halters 18 erstrecken, wobei die letztere um den Ausschubhub des Disc-Halters 18 länger als die erstere ist, verhindert.

Bei Erreichen der Endlage des Disc-Halters treffen die Außenabschnitte 126 der Froschfeder 70 auf entsprechende Anschläge des Gehäuses 10, wodurch die Froschfeder 70 unter der Wirkung einer Auswerffeder 40 in ihre andere stabile Lage gebracht und die Disc 56 um einen entsprechenden Hub etwa über die abgeklappte Frontwand 32 des Disc-Halters 18 von Fig. 9 hinausbefördert wird. Beim Wiedereinlegen schnappt die Froschfeder 70 wieder in die hintere stabile Position um.

Die Umsteuerung der Froschfeder 70 erfolgt dadurch, daß deren freie Enden 126 zunächst mit Spiel längs Nuten 132 laufen, bis sie kurz vor der Entnahmeposition von einer schrägen Steuerfläche 134 nach unten ausgelenkt werden. Etwa bei Erreichen der Endlage treffen die Enden 126 auf Anschlagflächen 136, wodurch die Froschfeder 70 umschnappt, so daß die Enden 126 die Stellung « o » einnehmen. Beim Wiedereinsetzen der Disc 56 schnappt die Froschfeder 70 ohne größeren Widerstand zurück, wobei die Enden 126 zur Position « x » gelangen. Wird jetzt der Disc-Halter 18 wieder eingeschoben, laufen die Enden 126 unter geringer federnder Auslenkung an der Steuerfläche 134 vorbei.

Die verschiedenen Ausführungsformen von Disc-Haltern 18 und Ausschubmechanismen sind unter entsprechender Anpassung wechselweise verwendbar.

**Patentansprüche**

1. Behälter für eine Schall- oder Bildplatte (56) mit einem Gehäuse (10), in dem mindestens ein jeweils eine Platte (56) aufnehmender Halter (18) gleitbeweglich zwischen einer inneren Aufbewahrungs- und einer äußeren Entnahmeposition geführt ist, in die der Halter (18) durch eine Federanordnung (40) vorgespannt ist, und mit einer Verriegelungsanordnung (42, 48), die den Halter in seiner Aufbewahrungsposition im Gehäuse (10) gegen die Federvorspannung hält und manuell entriegelbar ist, wobei jeder Halter eine Frontwand (32) aufweist, die die Gehäuseöffnung in der Aufbewahrungsposition abdeckt, und wobei die Frontwand (32) in der Entnahmeposition soweit quer zur Fluchtebene der Platte (56) verschwenkt ist, daß die Platte in Fluchtlinie aus dem Halter bewegbar ist, dadurch gekennzeichnet, daß ein auf die Platte (56) in der Entnahmeposition des Halters (18) wirkender Ausschubmechanismus (70, 100) vorgesehen ist, der die Platte (56) in Fluchtrichtung der Platte über die Frontwand hinaus in eine Position weiterfördert, in der sie vor der Frontwand auf ihren Hauptflächen zangenartig erfaßbar und entnehmbar ist.

2. Behälter nach Anspruch 1, dadurch gekennzeichnet, daß die Frontwand (32) von einem Halterhauptteil abklappbar ist.

3. Behälter nach Anspruch 1, dadurch gekennzeichnet, daß in der Entnahmeposition die Frontwand (32) zusammen mit zumindest einem Teil (30) des Halters (18) relativ zum Gehäuse (10) gekippt ist.

4. Behälter nach einem der Ansprüche 1 bis 3, dadurch gekennzeichnet, daß zumindest die Behälterfläche, die der besputen Seite der Platte (56) zugekehrt ist, wannenförmig eingetieft ist.

5. Behälter nach Anspruch 4, dadurch gekennzeichnet, daß alle den Plattenhauptflächen zugekehrten Behälterflächen wannenartig eingetieft sind.

6. Behälter nach einem der Ansprüche 1 bis 5, dadurch gekennzeichnet, daß der Ausschubmechanismus eine Federanordnung (100) umfaßt, die in der Aufbewahrungsposition vorgespannt ist.

7. Behälter nach Anspruch 6, dadurch gekennzeichnet, daß eine gemeinsame Federanordnung (100) für den Ausschub des Halters (18) und die Weiterförderung der Platte (56) vorgesehen ist.

8. Behälter nach einem der Ansprüche 1 bis 5, dadurch gekennzeichnet, daß der Ausschubmechanismus eine während der Bewegung des Halters (18) aus der Aufbewahrungs- in die Entnahmeposition umsteuerbare Einrichtung umfaßt.

9. Behälter nach Anspruch 8, dadurch gekennzeichnet, daß die umsteuerbare Einrichtung eine Froschfederanordnung (70) umfaßt.

10. Behälter nach Anspruch 9, dadurch gekennzeichnet, daß die Froschfederanordnung (70) durch gehäuseseitige Anschläge unter Einwirkung der Federanordnung (40) bzw. durch manuellen einwärts gerichteten Druck auf den Halter (18) umschnappbar ist.

11. Behälter nach einem der Ansprüche 3 bis 10, dadurch gekennzeichnet, daß der Halter (18) einen äußeren, die Frontwand (32) aufweisenden Rahmen (30) umfaßt, der gegenüber dem restlichen Halter (18) verschwenkbar ist.

12. Behälter nach Anspruch 11, dadurch gekennzeichnet, daß der Rahmen (30) seitliche, etwa dreieckige Ausschnitte (36) aufweist, die den Schwenkbereich des Rahmens (30) definieren.

13. Behälter nach Anspruch 11 oder 12, dadurch gekennzeichnet, daß die Federanordnung (40) exzentrisch bezüglich seiner Schwenkachse (84) am Rahmen (30) angreift, um diesem ein Schwenk-Drehmoment zu erteilen.

14. Behälter nach einem der Ansprüche 11 bis 13, dadurch gekennzeichnet, daß der Halter (18) ein Ausschubteil (54, 100) umfaßt, das mit dem äußeren Rahmen (30) in der Aufbewahrungsposition gekoppelt und zum Erreichen der Entnahmeposition entkoppelbar ist und auf das die Federanordnung (70, 110) einwirkt.

15. Behälter nach Anspruch 14, dadurch gekennzeichnet, daß das Ausschubteil (54, 100) die Platte (56) aufnimmt.

16. Behälter nach Anspruch 14 oder 15, dadurch gekennzeichnet, daß das Ausschubteil (54, 100) über eine vorbestimmte Strecke gleitverschieblich in dem Halter (18) geführt ist.

17. Behälter nach einem der Ansprüche 14 bis 16, dadurch gekennzeichnet, daß das Ausschubteil (54) durch die Froschfederanordnung (70) in Entnahmeposition vorgespannt und an den Halter (18) durch Druck in Einschubrichtung ankoppelbar ist, wobei die Kopplung in der Aufbewahrungsposition wieder gelöst ist.

18. Behälter nach einem der Ansprüche 1 bis 17, dadurch gekennzeichnet, daß die Federanordnung (40) eine Blattfeder umfaßt.

19. Behälter nach einem der Ansprüche 1 bis 18, dadurch gekennzeichnet, daß die Verriegelungsanordnung (42, 48) bei Einschub des Halters (18) in das Gehäuse (10) selbsteinrastend ausgebildet ist.

20. Behälter nach Anspruch 19, dadurch gekennzeichnet, daß die Verriegelungsanordnung einen in eine Falle (48) einrastenden, mittels einer manuell auslösbaren Taste (46) ausrastbaren Riegel (42) umfaßt.

21. Behälter nach einem der Ansprüche 1 bis 20, dadurch gekennzeichnet, daß der Halter (18) sich an den umlaufenden Rand einer eingelegten Platte (56) im Bereich von deren der Frontwand (32) zugewandter Hälfte anlegende, federnd auslenkbare Bremsorgane (66) aufweist, die beim Einschieben einer Platte (56) bis zu einem Abstand voneinander gleich dem Plattendurchmesser ausweichen.

22. Behälter nach Anspruch 21, dadurch gekennzeichnet, daß die Bremsorgane (66) einstückig an den aus Kunststoff gespritzten Halter (18) bzw. Ausschubteil (54) angeformt sind.

23. Behälter nach Anspruch 21 oder 22, dadurch gekennzeichnet, daß der Winkel ·definiert durch den Mittelpunkt der Platte (56) und die Berührungspunkte der Bremsorgane (66) kleiner als 160° und größer als 90°, insbesondere etwa 140°, ist.

24. Behälter nach einem der Ansprüche 1 bis 23, dadurch gekennzeichnet, daß das Gehäuse (10) und zumindest diejenigen Teile des Halters (18), die keiner elastischen Beanspruchung unterworfen sind, als Kunststoffspritzteile ausgebildet sind.

**Claims**

1. A container for a gramophone record or video disc (56) having a housing (10) in which at least one holder (18) accommodating in each case one disc (56) is slideably guided between an inner storage position and an outer removal position into which the holder (18) is biassed by a spring assembly (40), and having a locking arrangement (42, 48) which holds the holder (18) in its storage position in the housing (10) against the spring bias and is manually releasable, each holder (18) having a front wall (32) which covers the housing opening in the storage position, and, in the removal position, the front wall (32) being pivoted transversely with respect to the plane lining through with the disc (56) to such an extent that the disc (56) is movable out of the holder in alignment, characterized in that there is provided an ejection mechanism (70, 100) acting on the disc (56) in the removal position of the holder (18), which ejection mechanism transports the disc (56) further in the direction lining through with the disc over and beyond the front wall into a position in which it can be gripped pincer-fashion by its main surfaces in front of the front wall, and removed.

2. A container according to claim 1, characterized in that the front wall (32) is arranged to be swung down from a main part of the holder.

3. A container according to claim 1, characterized in that, in the removal position, the front wall (32), together with at least one part (30) of the holder (18), is tilted relative to the housing (10).

4. A container according to one of claims 1 to 3, characterized in that at least that face of the container facing towards the tracked side of the disc (56) is recessed in the manner of a dish.

5. A container according to claim 4, characterized in that all faces of the container facing towards the main faces of the disc are recessed in the manner of a dish.

6. A container according to one of claims 1 to 5, characterized in that the ejection mechanism comprises a spring assembly (100) which is prestressed in the storage position.

7. A container according to claim 6, characterized in that a common spring assembly (100) is provided for the ejection of the holder (18) and the further transport of the disc (56).

8. A container according to one of claims 1 to 5, characterized in that the ejection mechanism comprises a device which is arranged to be changed over during the movement of the holder (18) from the storage position into the removal position.

9. A container according to claim 8, characterized in that the reversible device comprises a over-centre spring assembly (70).

10. A container according to claim 9, characterized in that the over-centre spring assembly (70) is arranged to be snapped over by stop members on the housing under the influence of the spring assembly (40), or by manual, inwardly directed pressure on the holder (18).

11. A container according to one of claims 3 to 10, characterized in that the holder (18) includes an outer frame (30) having the front wall (32), which frame (30) is pivotable with respect to the remainder of the holder (18).

12. A container according to claim 11, characterized in that the frame (30) has lateral, approximately triangular cut-outs (36) which define the pivoting range of the frame (30).

13. A container according to claim 11 or 12, characterized in that the spring assembly (40) acts eccentrically on the frame (30) in order to impart a pivoting-turning moment thereto.

14. A container according to one of claims 11 to 13, characterized in that the holder (18) comprises a part to be ejected (54, 100) which is coupled to the outer frame (30) in the storage position and is arranged to be disengaged to attain the removal position and on which the spring assembly (70, 110) acts.

15. A container according to claim 14, characterized in that the part to be ejected (54, 100) accommodates the disc (56).

16. A container according to claim 14 or 15, characterized in that the part to be ejected (54, 100) is slideably guided in the holder (18) over a predetermined path.

17. A container according to one of claims 14 to 16, characterized in that the part to be ejected (54) is biassed by the over-centre spring assembly (70) into the removal position and is arranged to be coupled up to the holder (18) by pressure in the insertion direction, wherein the coupling is disengaged again in the storage position.

18. A container according to one of claims 1 to 17, characterized in that the spring assembly (40) comprises a leaf spring.

19. A container according to one of claims 1 to 18, characterized in that the locking arrangement (42, 48) is designed to be self-locking upon insertion of the holder (18) into the housing (10).

20. A container according to claim 19, characterized in that the locking arrangement comprises a latch (42) locking into a catch aperture (48), which latch is releasable by means of a manually operated button (46).

21. A container according to one of claims 1 to 20, characterized in that the holder (18) has resiliently yielding check members (66) which position themselves against the circumferential edge of an inserted disc (56) in the region of its half nearest to the front wall (32), which check members yield resiliently upon insertion of a disc (56) to a distance apart that is the same as the diameter of the disc.

22. A container according to claim 21, characterized in that the check members (66) are moulded integrally on the holder (18) or part to be ejected (54) which is injection-moulded from plastics.

23. A container according to claim 21 or 22, characterized in that the angle defined by the centre point of the disc (56) and the points of contact of the check members (66) is smaller than 160° and greater than 90°, especially approximately 140°..

24. A container according to one of claims 1 to 23, characterized in that the housing (10) and at least those parts of the holder (18) that are subjected to no resilient stressing are constructed as injection-moulded plastics parts.

## Revendications

1. Récipient pour disques phono ou vidéo (56) comprenant un boîtier (10), dans lequel au moins un seul disque (56) est entraîné par un porte-disque (18) coulissable en une position intérieure et une position extérieure de prélèvement dans laquelle le porte-disque (18) est tenu sous une précompression au moyen d'un dispositif à ressort (40), et un dispositif de verrouillage (42, 48) manuellement libérable, maintient le porte-disque (18) dans sa position de stockage dans le boîtier (10) contre la précompression du ressort, chaque porte-disque (18) présente une paroi frontale (32) qui recouvre l'ouverture du boîtier pendant le stockage et qui bascule transversalement au plan de déplacement du disque (56) lors du prélèvement de celui-ci jusqu'à ce que l'on puisse retirer le disque (56) en ligne droite, caractérisé en ce qu'il est prévu un mécanisme d'expulsion (70, 100) qui agit sur le disque (56) lorsque celui-ci se trouve en position de prélèvement de façon à le déplacer par rapport à la paroi frontale (32) jusqu'à ce que l'on puisse le serrer et le saisir par ses surfaces principales.

2. Récipient selon la revendication 1, caractérisé en ce que la paroi frontale (32) d'une partie principale du porte-disque est rabattable.

3. Récipient selon la revendication 1, caractérisé en ce que dans la position de prélèvement, la paroi frontale (32) est renversée avec au moins une partie (30) du porte-disque (18) par rapport au boîtier (10).

4. Récipient selon l'une des revendications 1 à 3, caractérisé en ce qu'au moins la surface du récipient qui est tournée du côté de la piste du disque est conformée en cuve.

5. Récipient selon la revendication 4, caractérisé en ce que toutes les surfaces du récipient conformées en cuvelage sont tournées vers la surface principale du disque.

6. Récipient selon l'une des revendications 1 à 5, caractérisé en ce que le mécanisme d'expulsion contient un dispositif à ressort (100) qui est précompressé dans la position de stockage.

7. Récipient selon la revendication 6, caractérisé en ce qu'il est prévu une coopération du dispositif à ressort (100) à l'expulsion du porte-disque (18) et à la sortie du disque (56).

8. Récipient selon l'une des revendications 1 à 5, caractérisé en ce que pendant le déplacement du porte-disque (18) de la position de stockage à la position de prélèvement le mécanisme d'expulsion est agencé de manière réversible.

9. Récipient selon la revendication 8, caractérisé en ce que l'agencement réversible comprend un dispositif à ressort à déclic (70).

10. Récipient selon la revendication 9, caractérisé en ce que le dispositif à déclic (70) est apte à se détendre brusquement sous l'action du dispositif à ressort (40) au moyen d'ergots du côté du boîtier, notamment par une flexion manuelle provoquée par une pression sur le porte-disque (18).

11. Récipient selon l'une des revendications 3 à 10, caractérisé en ce que le porte-disque (18) comprend une partie extérieure, la paroi frontale (32) présentant une plaque (30) qui est déplaçable pour venir en regard du porte-disque d'une manière décalée.

12. Récipient selon la revendication 11, caractérisé en ce que la plaque (30) latérale présente environ trois angles formés par des entailles (36), qui définissent la plage de pivotement de la plaque (30).

13. Récipient selon la revendication 11 ou 12, caractérisé en ce que le dispositif à ressort (40) qui fournit un effort excentrique par rapport à l'axe de basculement (84) du cadre (30), communique un couple de basculement l'entourant.

14. Récipient selon l'une des revendications 11 à 13, caractérisé en ce que le porte-disque (18) comprend une partie apte à effectuer l'expulsion (54, 100), liée à la plaque (30) extérieure dans la position de stockage et pour atteindre la disposition de prélèvement est mobile et agit sur le dispositif à ressort (70, 110).

15. Récipient selon la revendication (14), caractérisé en ce que la partie apte à l'expulsion (54, 100) prend le disque (56).

16. Récipient selon la revendication 14 ou 15, caractérisé en ce que la partie apte à effectuer l'expulsion (54, 100) coulisse dans un intervalle prédéfini dans le porte-disque (18).

17. Récipient selon l'une des revendications 14 à 16, caractérisé en ce que la partie apte à effectuer l'expulsion (54) du disque (18) et au moyen du ressort à déclic (70) en position pré-compressée de prélèvement est apte à une liaison au moyen d'une poussée dirigée dans le sens de la fermeture, ce qui permet une nouvelle fois de mettre fin à la liaison dans la position de stockage.

18. Récipient selon l'une des revendications 1 à 17, caractérisé en ce que le dispositif à ressort (40) comprend un ressort à lame.

19. Récipient selon l'une des revendications 1 à 18, caractérisé en ce que le dispositif de verrouillage (42, 48) est formé par l'insertion avec encliquetage automatique du porte-disque (18) dans le boîtier (10).

20. Récipient selon la revendication 19, caractérisé en ce que le dispositif de verrouillage s'encliquetant dans un dispositif de blocage (48) comprend comme moyen une touche (46) manuelle effaçable d'un verrou (42) accrochable de l'extérieur.

21. Récipient selon l'une des revendications 1 à 20, caractérisé en ce que le porte-disque (18) présente la moitié du disque (56) mis en place dans le bord périphérique dans la zone de la paroi frontale (32) fixée à la paroi, des organes de freinage (66) conçus à ressort, cèdent par l'introduction d'un disque (56) jusqu'à une distance de l'un par rapport à l'autre égale au diamètre du disque.

22. Récipient selon la revendication 21, caractérisé en ce que les organes de freinage (66) en un seul morceau en matière plastique faisant jaillir le porte-disque (18) notamment la partie apte à effectuer l'expulsion (54), sont venus de forme.

23. Récipient selon l'une des revendications 21 ou 22, caractérisé en ce que l'angle défini entre le point central du disque (56) et le point de contact des organes de freinage (66) est plus petit que 160° et est plus grand que 90°, et est en particulier d'environ 140°.

24. Récipient selon l'une des revendications 1 à 23, caractérisé en ce que le boîtier (10) et au moins celle des parties du porte-disque (18), qui sont soumis à une faible sollicitation élastique sont représentées comme des parties éjectables en matière plastique.

Fig. 1, Fig. 2, Fig. 3

Fig. 4.

**Fig. 5**

**Fig. 6**

**Fig. 7**

**Fig. 8**

5

**Fig. 9**

Fig. 10a

Fig. 10b

**Fig. 10c**

EP 0 207 111 B1